# EUROPÄISCHE PATENTANMELDUNG

(11) **EP 1 752 345 A1**
(43) Veröffentlichungstag der Anmeldung: **14.02.2007**
(21) Anmeldenummer: 06016667.5
(22) Anmeldetag: 09.08.2006
(51) Int. Cl.: B60R 21/34, B60R 21/013

(54) **Sicherheitsvorrichtung für ein Kraftfahrzeug**

(30) Priorität: 10.08.2005 DE 202005012564 U
(71) Anmelder: TRW Automotive GmbH, 73553 Alfdorf (DE)
(72) Erfinder: Hasbach, Thomas, 50674 Köln (DE)
(74) Vertreter: Strass, Jürgen

(57) **Zusammenfassung**

Eine Sicherheitsvorrichtung für ein Kraftfahrzeug umfaßt eine als Einheit im Fahrzeug installierte Fahrzeuginsassenschutzeinrichtung und einen elektrischen Aufprallsensor (24). Die als Einheit im Fahrzeug installierte Fahrzeuginsassenschutzeinrichtung und der elektrischen Aufprallsensor (24) bilden eine vormontierte Baugruppe.

## Beschreibung

Die Erfindung betrifft eine Sicherheitsvorrichtung für ein Kraftfahrzeug, umfassend eine als Einheit im Fahrzeug installierte Fahrzeuginsassenschutzeinrichtung und einen elektrischen Aufprallsensor. Die Erfindung betrifft ferner ein Fahrzeuginsassen-Schutzsystem in einem Kraftfahrzeug mit einer solchen Sicherheitsvorrichtung.

Moderne Fahrzeuge weisen heutzutage eine Vielzahl technischer Maßnahmen zum Schutz der Fahrzeuginsassen auf. Ein Beispiel hierfür sind Airbag-Rückhaltesysteme, deren Aktivierung von den Daten entsprechender elektrischer Sensoren (für Frontal-, Seiten- und Heckaufprall) abhängt, oder auch elektrische Gurtaufroller, die eine reversible Gurtstraffung ermöglichen. Der Montageaufwand für die einzelnen Komponenten der Fahrzeuginsassen-Schutzsysteme erreicht ein beträchtliches Ausmaß, was sich dementsprechend ungünstig auf die Gesamtkosten auswirkt.

Aufgabe der Erfindung ist es, den Aufwand bei der Montage von Komponenten eines Fahrzeuginsassen-Schutzsystems zu reduzieren.

Zur Lösung dieser Aufgabe wird eine Sicherheitsvorrichtung vorgeschlagen, umfassend eine als Einheit im Fahrzeug installierte Fahrzeuginsassenschutzeinrichtung und einen elektrischen Aufprallsensor, die dadurch gekennzeichnet ist, daß die als Einheit im Fahrzeug installierte Fahrzeuginsassenschutzeinrichtung und der elektrische Aufprallsensor eine vormontierte Baugruppe bilden. Die Erfindung beruht auf der Erkenntnis, daß die Zusammenfassung der Fahrzeuginsassenschutzeinrichtung und des elektrischen Aufprallsensors zu einer vormontierten Baugruppe zu logistischen Vorteilen führt, selbst wenn der elektrische Aufprallsensor kein Funktionsbestandteil der jeweiligen Fahrzeuginsassenschutzeinrichtung ist.

Gemäß einer besonders bevorzugten Ausführungsform der Erfindung, ist die Fahrzeuginsassenschutzeinrichtung ein Gurtaufroller. Bei dem Aufprallsensor handelt es sich nicht um den für die Blockierung des Gurtaufrollers üblichen mechanischen fahrzeug-/gurtsensitiven Sensor, sondern vorzugsweise um einen Seitenaufprallsensor für die Aktivierung eines Seitenairbagmoduls des Fahrzeugs. Ein Gurtaufroller und ein elektrischer Seitenaufprallsensor werden oftmals nicht weit entfernt voneinander montiert, z.B. im Bereich der B-Säule eines Fahrzeugs, so daß die Abweichung vom bisherigen Anbringungsort nicht ins Gewicht fällt oder durch geeignete Auslegung ausgeglichen werden kann. Außerdem erfordern sowohl ein elektrischer Sensor zur Detektierung eines Aufpralls als auch ein Gurtaufroller eine stabile, widerstandsfähige Befestigung. Die Zusammenfassung eines Gurtaufrollers und eines elektrischen Aufprallsensors zu einer Baugruppe vereinfacht die Handhabung erheblich, da diese Baugruppe vormontiert als "package" geliefert werden kann. Der Montageaufwand für den Sensor entfällt vollständig.

Der Gurtaufroller weist üblicherweise ein eigenes Gehäuse auf. Der elektrische Aufprallsensor kann entweder außen am Gehäuse angebracht oder innerhalb des Gehäuses angeordnet sein. Im letzteren Fall kann auf ein separates Sensorgehäuse verzichtet werden, was eine weitere Kosteneinsparung bedeutet. Es muß aber sichergestellt sein, daß der Gurtaufroller keinen Einfluß auf die Empfindlichkeit des elektrischen Aufprallsensors nimmt.

Die Montage der Baugruppe kann weiter vereinfacht werden, in dem sich der elektrische Aufprallsensor und der Gurtaufroller wenigstens ein gemeinsames Befestigungselement teilen, d.h. ein Element, das zur Befestigung des Gurtaufrollers vorgesehen ist, dient gleichzeitig zur Befestigung des elektrischen Aufprallsensors.

Besonders vorteilhaft erweist sich die erfindungsgemäße Sicherheitsvorrichtung für den Fall, daß der Gurtaufroller ein elektrischer Gurtaufroller ist. Anstelle einer separaten Verkabelung des elektrischen Aufprallsensors kann diese in die Verkabelung des Gurtaufrollers integriert werden, wodurch der Verkabelungsaufwand insgesamt erheblich reduziert wird.

Die Erfindung schafft auch ein Fahrzeuginsassen-Schutzsystem in einem Kraftfahrzeug mit einer erfindungsgemäßen Sicherheitsvorrichtung.

Es erweist sich als zweckmäßig, die erfindungsgemäße Sicherheitsvorrichtung an einer B- oder C-Säule des Fahrzeugs anzubringen. In diesen Bereichen werden üblicherweise Gurtaufroller angeordnet. Außerdem eignen sich diese Bereiche für die Positionierung des elektrischen Aufprallsensors. Bei einer solchen Anbringung dient der elektrische Aufprallsensor dann als Seitenaufprallsensor.

Es ist aber auch eine Anwendung denkbar, bei der der elektrische Aufprallsensor als hinterer Aufprallsensor (rear impact sensor) zur Detektierung eines Heckaufpralls dient, nämlich dann, wenn die erfindungsgemäße Sicherheitsvorrichtung mit dem Gurtaufroller im Bereich einer Lehne einer Rücksitzbank oder im Bereich einer Hutablage des Fahrzeugs angebracht ist.

Die Erfindung wird nachfolgend anhand eines Ausführungsbeispiels unter Bezugnahme auf die beigefügten Zeichnungen beschrieben. In den Zeichnungen zeigen:
- Figur 1 die Anbringung eines Gurtaufrollers und eines elektrischen Aufprallsensors nach dem Stand der Technik;
- Figur 2 eine Schnittansicht entlang der Linie II-II in Figur 1;
- Figur 3 eine erfindungsgemäße Sicherheitsvorrichtung in perspektivischer Ansicht in einer Position vor der Montage;
- Figur 4 die Sicherheitsvorrichtung aus Figur 3 in Montagestellung;
- Figur 5 ein Beifahrerairbagmodul im eingebauten Zustand in Schnittansicht;
- Figur 6 das Beifahrerairbagmodul aus Figur 5 in perspektivischer Ansicht;
- Figur 7 ein Knieairbagmodul im eingebauten Zustand in Schnittansicht; und
- Figur 8 ein Seitenairbagmodul im eingebauten Zustand in Schnittansicht.

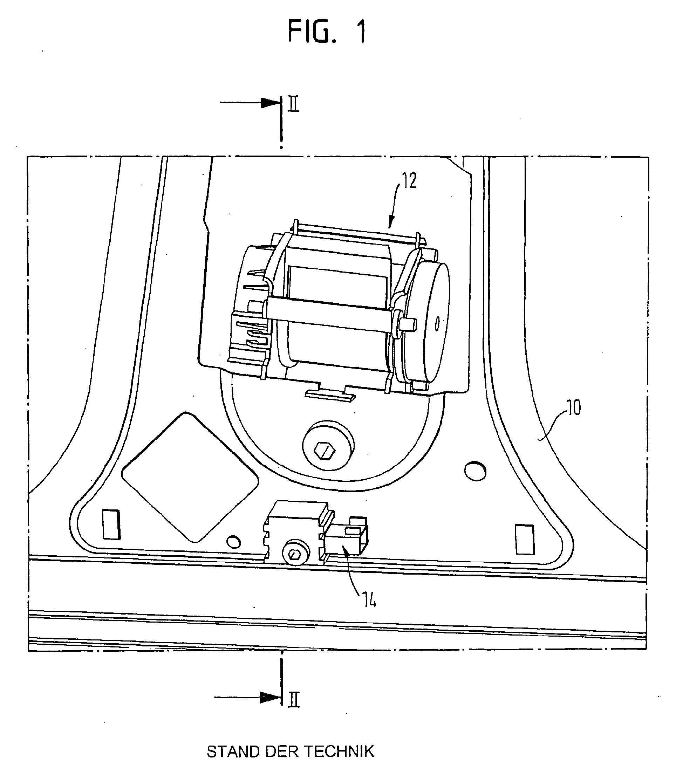

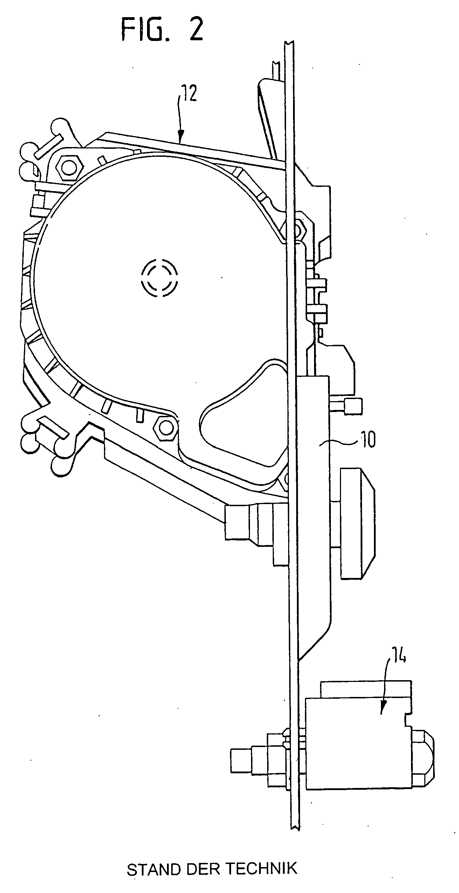

In den Figuren 1 und 2 ist ein Seitenkarosserieteil 10 eines Kraftfahrzeugs dargestellt, an dem ein Gurtaufroller 12 befestigt ist. Unabhängig vom Gurtaufroller 12 ist ein elektrischer Aufprallsensor 14 separat am Karosserieteil 10 befestigt. Der elektrische Aufprallsensor 14 ist ein Seitenaufprallsensor für die Aktivierung eines Seitenairbagmoduls des Fahrzeugs, d.h. er steht nicht in unmittelbarem Funktionszusammenhang mit dem Gurtaufroller 12, sondern mit einer anderen Fahrzeuginsassenschutzeinrichtung.

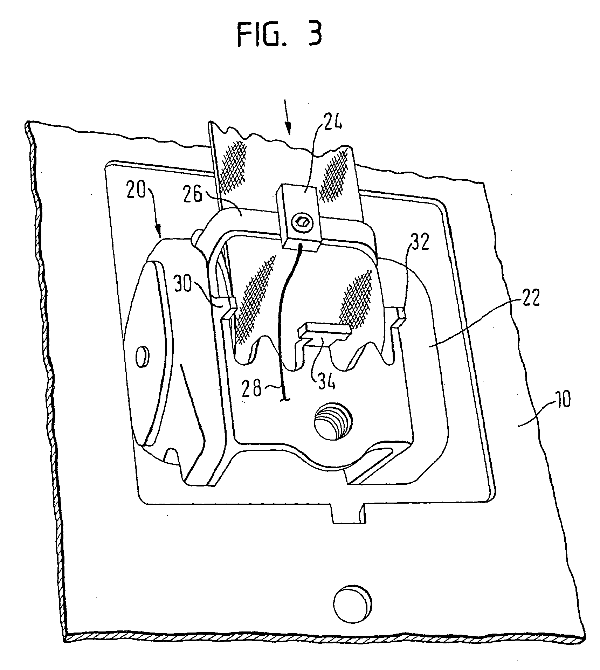

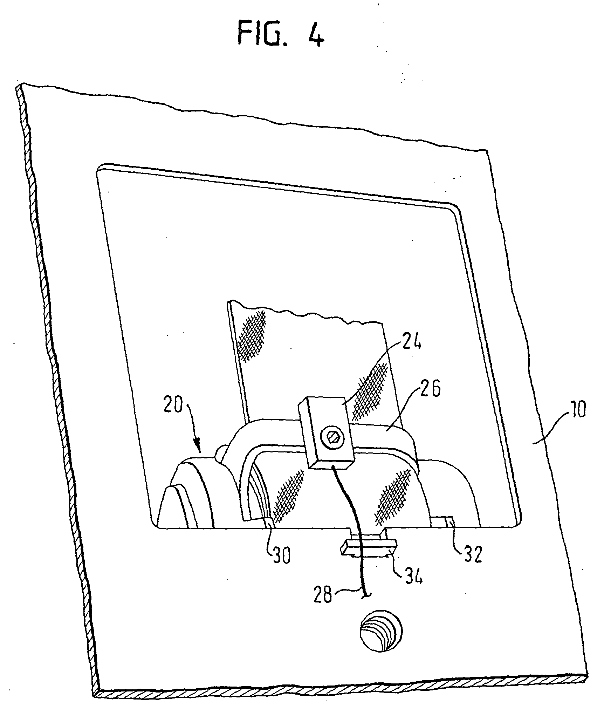

Die Figuren 3 und 4 zeigen eine erfindungsgemäße Sicherheitsvorrichtung mit einem Gurtaufroller 20, dessen wesentliche Bauteile von einem Gehäuse 22 zusammengehalten werden, und einem elektrischen Aufprallsensor 24. Auch hier ist der elektrische Aufprallsensor 24 ein Seitenaufprallsensor für die Aktivierung eines Seitenairbagmoduls des Fahrzeugs.

Der Gurtaufroller 20 und der elektrische Aufprallsensor 24 bilden gemeinsam eine vormontierte Baugruppe. Der elektrische Aufprallsensor 24 ist auf einem Steg 26 des Gurtaufrollergehäuses 22 angebracht. Die Verkabelung 28 des elektrischen Aufprallsensors 24 ist im Falle eines elektrischen Gurtaufrollers mit der Verkabelung des Gurtaufrollers 20 zusammengelegt, so daß ein einziger Steckverbinder für den Anschluß des Gurtaufrollers 20 und des elektrischen Aufprallsensors 24 ausreicht.

Der elektrische Aufprallsensor 24 kann auch an anderen Stellen befestigt werden, z.B. auf den mit 30 und 32 bezeichneten ausgestellten Abschnitten oder auf dem Element 34, die dann jeweils entsprechend vergrößert wären.

Die Sicherheitsvorrichtung kann im Bereich einer B- oder C-Säule des Fahrzeugs oder im Bereich einer Lehne einer Rücksitzbank oder im Bereich einer Hutablage angebracht werden, insbesondere wenn der Gurtaufroller 20 für den mittleren Sitz einer Rückbank vorgesehen ist.

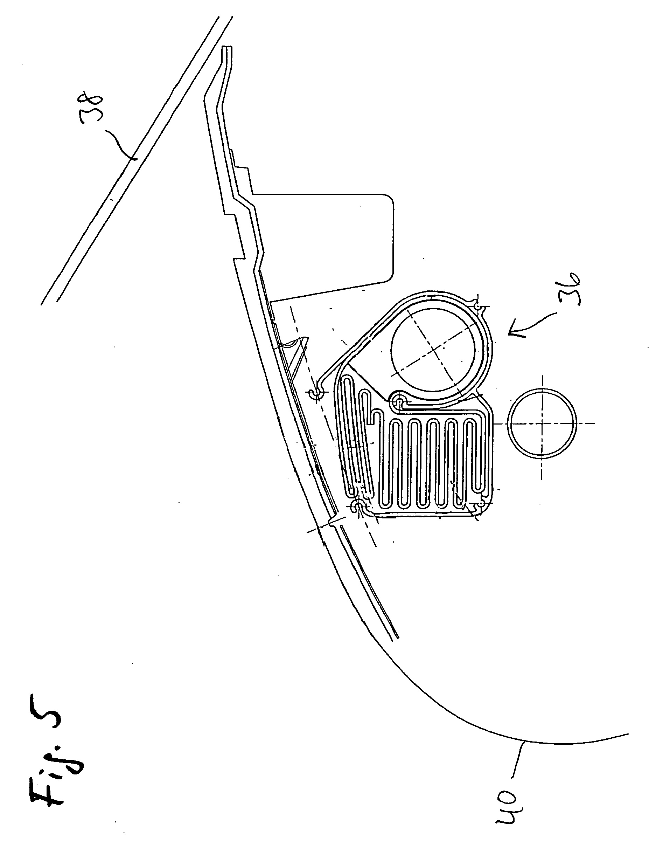

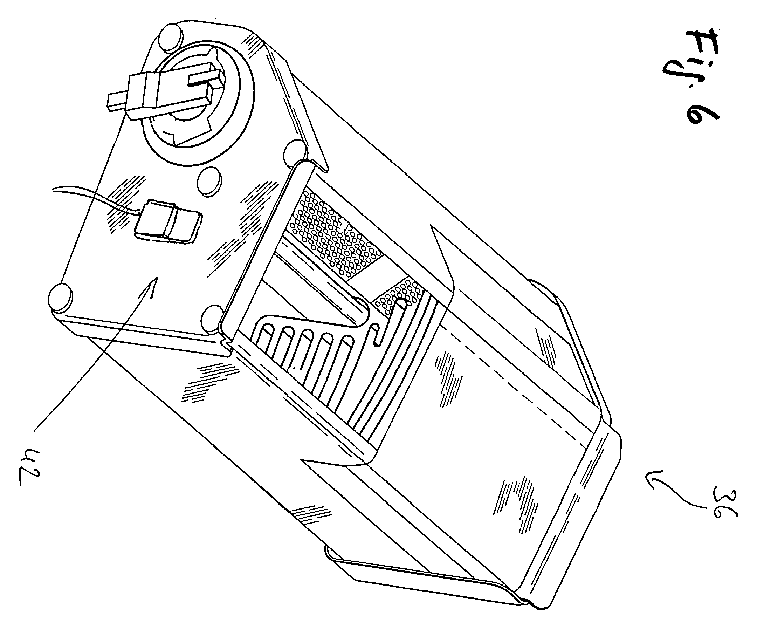

In den Figuren 5 und 6 ist eine weitere erfindungsgemäße Sicherheitsvorrichtung in Form eines Beifahrerairbagmoduls 36 gezeigt. Das Modul 36 ist zwischen der Windschutzscheibe 38 des Fahrzeugs und dem dem Insassen zugewandten Bereich des Armaturenbretts 40 angeordnet. An einer stirnseitigen Außenwand des Moduls 36 ist ein elektrischer Aufprallsensor 42 befestigt. (Der Sensor 42 kann aber auch an einer anderen geeigneten Stelle des Moduls 36 angebracht sein.) Der Sensor 42 ist entweder ein für die Aktivierung des Beifahrerairbagmoduls 36 vorgesehener Beschleunigungssensor oder ein Sensor für eine andere Fahrzeuginsassenschutzeinrichtung, z.B. ein Seitenaufprallsensor für die Aktivierung eines Seitenairbagmoduls des Fahrzeugs. Die Verkabelung des Sensors 42 kann mittels separat geführter Leitungen oder, bevorzugt, im ohnehin vorgesehenen Kabelstrang des Moduls 36 erfolgen.

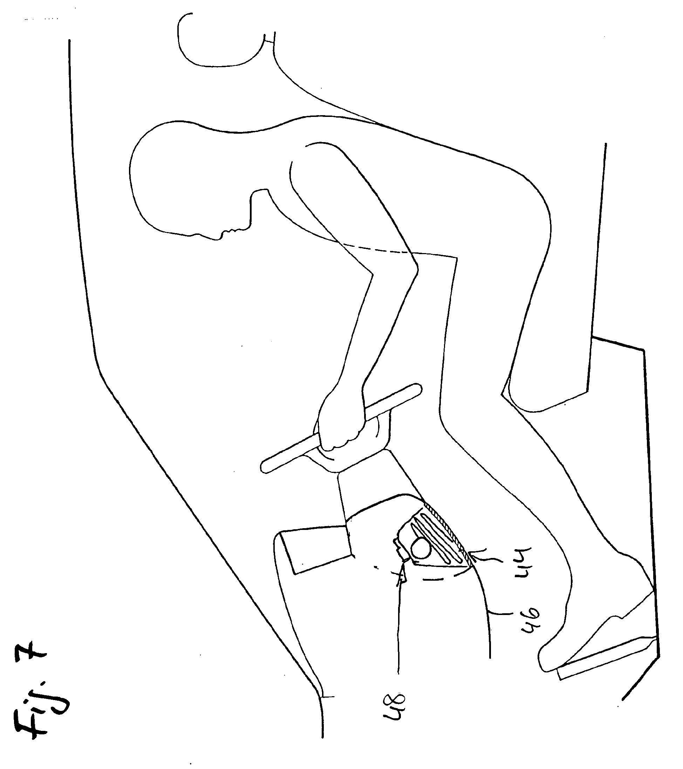

In Figur 7 ist eine erfindungsgemäße Sicherheitsvorrichtung in Form eines Knieairbagmoduls 44 gezeigt. Das Modul 44 ist hinter einer den Fußraum begrenzenden Wand 46 angeordnet. An einer Außenwand des Moduls 44 ist ein elektrischer Aufprallsensor 48 befestigt. (Der Sensor 48 kann aber auch an einer anderen geeigneten Stelle des Moduls 44 angebracht sein.) Der Sensor 48 ist entweder ein für die Aktivierung des Knieairbagmoduls 44 vorgesehener Beschleunigungssensor oder ein Sensor für eine andere Fahrzeuginsassenschutzeinrichtung, z.B. ein Seitenaufprallsensor für die Aktivierung eines Seitenairbagmoduls des Fahrzeugs. Die Verkabelung des Sensors 48 kann mittels separat geführter Leitungen oder, bevorzugt, im ohnehin vorgesehenen Kabelstrang des Moduls 44 erfolgen.

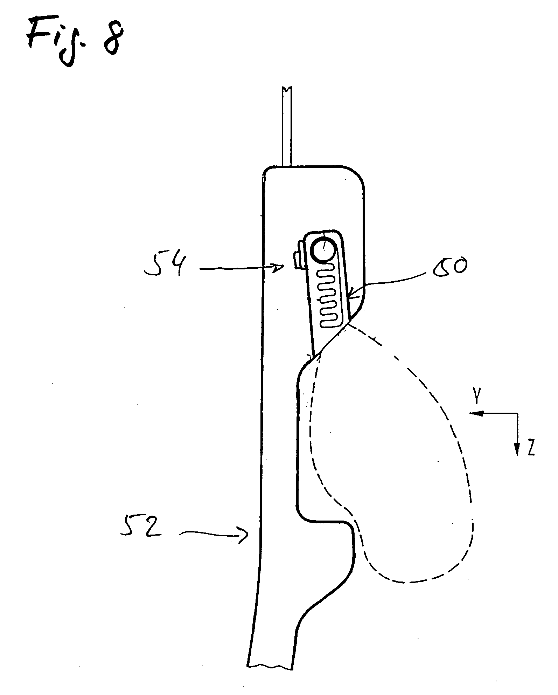

In Figur 8 ist eine erfindungsgemäße Sicherheitsvorrichtung in Form eines Seitenairbagmoduls 50 gezeigt. Das Modul 50 ist in eine Fahrzeugtür 52 integriert oder in einem anderen Bauraum der Fahrzeugseitenstruktur untergebracht. An einer Außenwand des Moduls 50 ist ein elektrischer Aufprallsensor 54 befestigt. (Der Sensor 54 kann aber auch an einer anderen geeigneten Stelle des Moduls 50 angebracht sein.) Der Sensor 54 ist entweder ein für die Aktivierung des Seitenairbagmoduls 50 vorgesehener Beschleunigungssensor oder ein Sensor für eine andere Fahrzeuginsassenschutzeinrichtung, z.B. ein (zusätzlicher) Aufprallsensor für die Aktivierung eines Frontairbagmoduls des Fahrzeugs. Die Verkabelung des Sensors 54 kann mittels separat geführter Leitungen oder, bevorzugt, im ohnehin vorgesehenen Kabelstrang des Moduls 50 erfolgen.

## Patentansprüche

1. Sicherheitsvorrichtung für ein Kraftfahrzeug, umfassend eine als Einheit im Fahrzeug installierte Fahrzeuginsassenschutzeinrichtung und einen elektrischen Aufprallsensor (24), **dadurch gekennzeichnet, daß** die als Einheit im Fahrzeug installierte Fahrzeuginsassenschutzeinrichtung und der elektrischen Aufprallsensor (24) eine vormontierte Baugruppe bilden.

2. Sicherheitsvorrichtung nach Anspruch 1, **dadurch gekennzeichnet, daß** der elektrische Aufprallsensor (24) ein Seitenaufprallsensor für die Aktivierung eines Seitenairbagmoduls des Fahrzeugs ist.

3. Sicherheitsvorrichtung nach Anspruch 1 oder 2, **dadurch gekennzeichnet, daß** die Fahrzeuginsassenschutzeinrichtung ein Gurtaufroller (20) ist.

4. Sicherheitsvorrichtung nach Anspruch 3, **dadurch gekennzeichnet, daß** der Gurtaufroller (20) ein Gehäuse (22) aufweist und der elektrische Aufprallsensor (24) außen am Gehäuse (22) angebracht ist.

5. Sicherheitsvorrichtung nach Anspruch 3, **dadurch gekennzeichnet, daß** der Gurtaufroller (20) ein Gehäuse (22) aufweist und der elektrische Aufprallsensor (24) innerhalb des Gehäuses (22) angeordnet ist.

6. Sicherheitsvorrichtung nach einem der Ansprüche 3 bis 5, **dadurch gekennzeichnet, daß** sich der Aufprallsensor (24) und der Gurtaufroller (20) wenigstens ein gemeinsames Befestigungselement teilen.

7. Sicherheitsvorrichtung nach einem der Ansprüche 3 bis 6, **dadurch gekennzeichnet, daß** der Gurtaufroller (20) ein elektrischer Gurtaufroller ist.

8. Sicherheitsvorrichtung nach Anspruch 1 oder 2, **dadurch gekennzeichnet, daß** die Fahrzeuginsassenschutzeinrichtung ein Frontairbagmodul ist.

9. Sicherheitsvorrichtung nach Anspruch 8, **dadurch gekennzeichnet, daß** die Fahrzeuginsassenschutzeinrichtung ein Beifahrerairbagmodul (36) ist.

10. Sicherheitsvorrichtung nach Anspruch 1 oder 2, **dadurch gekennzeichnet, daß** die Fahrzeuginsassenschutzeinrichtung ein Knieairbagmodul (44) ist.

11. Sicherheitsvorrichtung nach Anspruch 1 oder 2, **dadurch gekennzeichnet, daß** die Fahrzeuginsassenschutzeinrichtung ein Seitenairbagmodul (50) ist.

12. Fahrzeuginsassen-Schutzsystem in einem Kraftfahrzeug, mit einer Sicherheitsvorrichtung nach einem der Ansprüche 1 bis 7, **dadurch gekennzeichnet, daß** die Sicherheitsvorrichtung an einer B- oder C-Säule des Fahrzeugs angebracht ist.

13. Fahrzeuginsassen-Schutzsystem in einem Kraftfahrzeug, mit einer Sicherheitsvorrichtung nach einem der Ansprüche 1 bis 7, **dadurch gekennzeichnet, daß** die Sicherheitsvorrichtung im Bereich einer Rücklehne einer Rücksitzbank oder im Bereich einer Hutablage des Fahrzeugs angebracht ist.

14. Fahrzeuginsassen-Schutzsystem in einem Kraftfahrzeug, mit einer Sicherheitsvorrichtung nach Anspruch 8 oder 9, **dadurch gekennzeichnet, daß** die Sicherheitsvorrichtung in einem Bereich zwischen der Windschutzscheibe (38) des Fahrzeugs und dem dem Insassen zugewandten Bereich des Armaturenbretts (40) angeordnet ist.

15. Fahrzeuginsassen-Schutzsystem in einem Kraftfahrzeug, mit einer Sicherheitsvorrichtung nach Anspruch 10, **dadurch gekennzeichnet, daß** die Sicherheitsvorrichtung in einem Bereich hinter einer den Fußraum begrenzenden Wand (46) angeordnet ist.

16. Fahrzeuginsassen-Schutzsystem in einem Kraftfahrzeug, mit einer Sicherheitsvorrichtung nach Anspruch 11, **dadurch gekennzeichnet, daß** die Sicherheitsvorrichtung in eine Fahrzeugtür (52) integriert oder in einem anderen Bauraum der Fahrzeugseitenstruktur untergebracht ist.
